# EUROPEAN PATENT APPLICATION

(11) **EP 4 287 063 A1**
(43) Date of publication of application: **06.12.2023**
(21) Application number: 22783931.3
(22) Date of filing: 31.03.2022
(51) Int. Cl.: G06F 40/30

(54) **CORPUS ANNOTATION METHOD AND APPARATUS, AND RELATED DEVICE**

(30) Priority: 06.04.2021 CN 202110368058; 22.12.2021 CN 202111582918
(71) Applicant: Huawei Cloud Computing Technologies Co., Ltd., Guizhou 550025 (CN)
(72) Inventor: CHEN, Qi, Shenzhen, Guangdong 518129 (CN); ZHENG, Yi, Shenzhen, Guangdong 518129 (CN); WANG, Peng, Shenzhen, Guangdong 518129 (CN); WANG, Yu, Shenzhen, Guangdong 518129 (CN); LI, Minglei, Shenzhen, Guangdong 518129 (CN); DUAN, Xinyu, Shenzhen, Guangdong 518129 (CN); YUAN, Jing, Shenzhen, Guangdong 518129 (CN); HUAI, Baoxing, Shenzhen, Guangdong 518129 (CN)
(74) Representative: Körber, Martin Hans
(86) International application number: PCT/CN2022/084260
(87) International publication number: WO 2022/213864

(57) **Abstract**

A corpus annotation method and apparatus (102), and a related device are disclosed. The corpus annotation apparatus (102) obtains a corpus set provided by a user through a client, where the corpus set includes a plurality of semantic categories of corpuses that the user expects to annotate, determines a manual annotation corpus and an automatic annotation corpus falling within a target semantic category in the corpus set, obtains a manual annotation result of the manual annotation corpus, and automatically annotates the automatic annotation corpus based on the manual annotation result of the manual annotation corpus. The manual annotation result and an automatic annotation result that correspond to the automatic annotation corpus are used as training data to train an inference model. In this way, some corpuses are automatically annotated, improving efficiency of generating an annotation corpus, and reducing labor costs. In addition, domain experts can only need to manually annotate a small quantity of corpuses under each semantic category, reducing a quantity of manually annotated corpuses.

## Description

### TECHNICAL FIELD

This application relates to the field of data processing technologies, and in particular, to a corpus annotation method and apparatus, and a related device.

### BACKGROUND

Natural language processing (natural language processing, NLP) refers to a technology that uses a natural language used in human communication for interactive communication with a machine, and may use an artificial intelligence (artificial intelligence, AI) model (such as a deep learning model) to implement machine translation, question answering, speech recognition, and other functions. An inference effect of the AI model depends on a quantity and quality of annotation corpuses used for training the AI model.

Generally, an annotated corpus may be generated by domain experts through manual annotation. However, because a large quantity of annotation corpuses are required for training the AI model, the manner of generating the annotation corpuses is time-consuming and has high labor costs.

### SUMMARY

This application provides a corpus annotation method, to improve efficiency of generating an annotation corpus, reduce labor costs, and further reduce a quantity of manual annotation corpuses. In addition, this application further provides a corpus annotation apparatus, a computer device, a computer-readable storage medium, and a computer program product.

According to a first aspect, this application provides a corpus annotation method. The method is applied to a corpus annotation system. The corpus annotation system includes a client and a corpus annotation apparatus. When the method is specifically implemented, the corpus annotation apparatus obtains a corpus set provided by the user through the client. The corpus set includes a plurality of semantic categories of corpuses that the user expects to annotate, such as a movie and television semantic category of corpuses, a medical semantic category of corpuses, a motion semantic category of corpuses, and the like. Then, for a target semantic category of corpuses (that is, any one of the plurality of semantic categories), the corpus annotation apparatus determines a manual annotation corpus and an automatic annotation corpus falling within the target semantic category in the corpus set, that is, classifies corpuses falling within the target semantic category into the manual annotation corpus and the automatic annotation corpus, and obtains a manual annotation result of the manual annotation corpus. For example, the manual annotation corpus may be sent to the client for presentation, to obtain a manual annotation result of the user on the client for the manual annotation corpus, so that the corpus annotation apparatus automatically annotates the automatic annotation corpus based on the manual annotation result of the manual annotation corpus to obtain an automatic annotation result of the automatic annotation corpus. The manual annotation result and the automatic annotation result are used as training data to train an inference model of the user or another user.

In this way, in a process of generating the annotation corpus, the corpus annotation apparatus automatically annotates remaining corpuses based on manual annotation results of some corpuses. This can not only shorten time consumed for generating the annotation corpus and improve efficiency of generating the annotation corpus, but also can reduce labor costs. In addition, the corpus annotation apparatus automatically annotates a corpus at a granularity of a semantic category that the corpus falls within. Therefore, for a plurality of corpuses under each semantic category, domain experts may only need to manually annotate a small quantity of corpuses under the semantic category, and remaining corpuses under the semantic category are automatically annotated. In this case, a quantity of corpuses manually annotated by the domain experts can be reduced to dozens or hundreds (not all categories of corpuses need to be covered by annotating a large quantity of corpuses), so that the quantity of the manually annotated corpuses can be effectively reduced.

In a possible implementation, in addition to the client and the corpus annotation apparatus, the corpus annotation system may further include a model training platform, and the model training platform is configured with at least one inference model. After the corpus annotation apparatus completes annotation of the corpuses in the corpus set, the model training platform may train the inference model of the user (that is, the user that provides the corpus set) based on the manual annotation result of the manual annotation corpus and the automatic annotation result of the automatic annotation corpus under each semantic category in the corpus set. In this way, not only the training data required for training the inference model of the user can be automatically generated, but also the inference model that meets expectations of the user can be automatically trained by using the annotation corpus, thereby improving user experience.

In a possible implementation, in addition to the client and the corpus annotation apparatus, the corpus annotation system may further include a model training platform, and the model training platform is configured with at least one inference model. After the corpus annotation apparatus completes annotation of the corpuses in the corpus set, the model training platform may train an inference model of another user based on a selection operation performed by the another user for the corpus set and by using a manual annotation result and an automatic annotation result that correspond to the corpus set and that are selected by the another user. In an actual application, the corpus annotation apparatus may generate a plurality of annotated corpuses based on a plurality of different corpus sets, providing annotated corpuses selected by the user for training the inference model. In this way, not only flexibility of selecting the corpus set by the another user can be improved, but also the model training platform can automatically train, by using the annotated corpus selected by the another user, an inference model that meets expectations of the another user for the another user, so that experience of the another user can be improved.

In a possible implementation, when annotating the automatic annotation corpus, the corpus annotation apparatus may calculate a semantic distance between the manual annotation corpus and the automatic annotation corpus. When the semantic distance satisfies a preset condition, the corpus annotation apparatus annotates the automatic annotation corpus based on the manual annotation result of the manual annotation corpus, a syntax structure of the manual annotation corpus, and a syntax structure of the automatic annotation corpus. In this way, based on a semantic distance between two corpuses, the corpus annotation apparatus can automatically annotate the corpuses, thereby improving efficiency of generating the annotation corpus and reducing annotation costs.

It should be noted that there may be one or more manual annotation corpuses under the target semantic category. In addition, when there are a plurality of manual annotation corpuses, the corpus annotation apparatus may separately calculate a semantic distance between each manual annotation corpus and a same automatic annotation corpus, and may annotate the automatic annotation corpus by using a manual annotation result corresponding to a manual annotation corpus with a minimum semantic distance from the automatic annotation corpus. Alternatively, the corpus annotation apparatus may calculate the semantic distance between each manual annotation corpus and the same automatic annotation corpus one by one. In addition, when a semantic distance between a manual annotation corpus and the automatic annotation corpus is less than a preset threshold, the corpus annotation apparatus may stop calculation (that is, no longer calculate semantic distances between remaining manual annotation corpuses and the automatic annotation corpus), and annotate the automatic annotation corpus by using the manual annotation result corresponding to the manual annotation corpus. In this way, for each automatic annotation corpus, a manual annotation corpus whose semantic distance satisfies the preset condition may be determined in the foregoing manner, to annotate the automatic annotation corpus by using the manual annotation result corresponding to the manual annotation corpus.

In addition, when the semantic distance satisfies the preset condition, specifically, when the semantic distance between the manual annotation corpus and the automatic annotation corpus is less than the preset threshold, for a single automatic annotation corpus, if it is determined, through traversal calculation, that the semantic distance between the manual annotation corpus and the automatic annotation corpus is not less than the preset threshold, the corpus annotation apparatus may not automatically annotate the automatic annotation corpus. For example, the corpus annotation apparatus may send the automatic annotation corpus to the client, so that the user manually annotates the automatic annotation corpus on the client and the like, to improve accuracy of a corpus annotation.

In a possible implementation, when calculating the semantic distance, specifically, the corpus annotation apparatus may obtain a first vectorized feature of the manual annotation corpus and a second vectorized feature of the automatic annotation corpus. The vectorized feature of the corpus may be, for example, a feature of the corpus represented by using a vector in at least one dimension, such as word segmentation, sentence segmentation, part-of-speech tagging, syntactic parsing, keyword extraction, a custom template, rule processing, and the like. Then, the corpus annotation apparatus may calculate the semantic distance between the manual annotation corpus and the automatic annotation corpus based on the first vectorized feature and the second vectorized feature. In this way, the corpus annotation apparatus may determine the semantic distance between the two corpuses in a vectorized calculation manner.

In a possible implementation, the corpus annotation apparatus may calculate the semantic distance by using an AI model. For example, the corpus annotation apparatus may extract vectorized features of the corpuses by using the AI model, and calculate the semantic distance between the corpuses based on the vectorized features. In this case, the corpus annotation apparatus may further update the AI model. Specifically, the corpus annotation apparatus may obtain a manual check result for an annotation result of the automatic annotation corpus. The manual check result may indicate, for example, whether the annotation result of the corpus annotation apparatus for the automatic annotation corpus is correct, so that the corpus annotation apparatus may update, when the manual check result indicates that the automatic annotation corpus is incorrectly annotated, the AI model by using the automatic annotation corpus and the manual check result. For example, before the AI model is updated, the calculated semantic distance between the manual annotation corpus and the automatic annotation corpus satisfies the preset condition (but the manual check result reflects that the two corpuses differ greatly), but a semantic distance between the manual annotation corpus and the automatic annotation corpus calculated by using an updated AI model does not satisfy the preset condition, so that accuracy of the semantic distance between the two corpuses calculated by using the AI model can be improved.

In a possible implementation, the annotation result of the automatic annotation corpus may include confidence. In this case, the corpus annotation apparatus may obtain a manual check result for the annotation result of the automatic annotation corpus when the confidence of the automatic annotation corpus is less than a confidence threshold. That is, the corpus annotation apparatus may select some automatic annotation results with low confidence for manual check by the user, and the AI model is subsequently updated based on the manual check result, improving precision of the AI model.

In a possible implementation, before determining the manual annotation result falling within the target semantic category and the automatic annotation corpus falling within the target semantic category in the corpus set, the corpus annotation apparatus may provide a semantic category configuration interface, and may present the semantic category configuration interface to the user through the client. In this case, the user configures the semantic category on the semantic category configuration interface, the corpus annotation apparatus may respond to a configuration operation of the user on the semantic category configuration interface, determine a semantic category that each corpus in the corpus set falls within, and cluster the corpuses in the corpus set based on a plurality of semantic categories configured by the user. In this way, the user may specify the plurality of semantic categories that the corpuses in the semantic set fall within, thereby improving flexibility and freedom of corpus clustering.

In an actual application, the user may not need to specify a semantic category for clustering, and the corpus annotation apparatus may automatically cluster the plurality of corpuses in the corpus set directly by using a corresponding cluster algorithm. This is not limited in this embodiment.

In a possible implementation, before clustering the corpuses in the corpus set, the corpus annotation apparatus may further provide a feature configuration interface. The feature configuration interface may include a plurality of feature candidates. Each feature candidate may be, for example, a feature of a corpus in one dimension such as word segmentation, sentence segmentation, part-of-speech tagging, syntactic parsing, keyword extraction, a custom template, rule processing, or the like. In addition, the feature configuration interface may be presented to the user through the client, allowing the user selects which feature candidate or feature candidates are used to cluster the corpuses. In response to a selection operation of the user on the feature configuration interface for the plurality of feature candidates, the corpus annotation apparatus determines a target feature used for clustering the corpuses in the corpus set, to cluster the corpuses by using the target feature. In this way, the user may specify the feature used for the corpus clustering, thereby improving flexibility and freedom of the corpus clustering.

In an actual application, the corpus annotation apparatus may alternatively use a feature used in the case in which the user does not need to specify clustering. For example, the corpus annotation apparatus may cluster the corpuses by using all the feature candidates by default. This is not limited in this embodiment.

According to a second aspect, this application provides a corpus annotation apparatus. The corpus annotation apparatus is used in a corpus annotation system. The corpus annotation system further includes a client, and the corpus annotation apparatus includes: a corpus determining module, configured to: obtain a corpus set provided by a user through the client, where the corpus set includes a plurality of semantic categories of corpuses that the user expects to annotate; and determine a manual annotation corpus and an automatic annotation corpus falling within a target semantic category in the corpus set; and an annotation module, configured to obtain a manual annotation result of the manual annotation corpus, and annotate the automatic annotation corpus based on the manual annotation result of the manual annotation corpus, to obtain an automatic annotation result of the automatic annotation corpus, where the manual annotation result and the automatic annotation result are used as training data to train an inference model.

In a possible implementation, the annotation module is configured to: calculate a semantic distance between the manual annotation corpus and the automatic annotation corpus, and when the semantic distance satisfies a preset condition, annotate the automatic annotation corpus based on the manual annotation result of the manual annotation corpus, a syntax structure of the manual annotation corpus, and a syntax structure of the automatic annotation corpus.

In a possible implementation, the annotation module is configured to: obtain a first vectorized feature of the manual annotation corpus and a second vectorized feature of the automatic annotation corpus, and calculate the semantic distance between the manual annotation corpus and the automatic annotation corpus based on the first vectorized feature and the second vectorized feature.

In a possible implementation, the annotation module is configured to calculate the semantic distance by using an artificial intelligence AI model. The corpus annotation apparatus further includes a model optimization module, configured to: obtain a manual check result for an annotation result of the automatic annotation corpus, and when the manual check result indicates that the automatic annotation corpus is incorrectly annotated, update the AI model by using the automatic annotation corpus and the manual check result.

In a possible implementation, the annotation result of the automatic annotation corpus includes confidence. The model optimization module is configured to obtain the manual check result for the annotation result of the automatic annotation corpus when the confidence is less than a confidence threshold.

In a possible implementation, the corpus determining module is further configured to: provide a semantic category configuration interface before the corpus determining module determines the manual annotation corpus and the automatic annotation corpus falling within the target semantic category in the corpus set, where the semantic category configuration interface is presented to the user through the client; in response to a configuration operation performed by the user on the semantic category configuration interface, determine a semantic category that each of corpuses in the corpus set falls within; and cluster the corpuses in the corpus set based on the plurality of semantic categories.

In a possible implementation, the corpus determining module is further configured to provide a feature configuration interface, where the feature configuration interface includes a plurality of feature candidates, and the feature configuration interface is presented to the user through the client; and in response to a selection operation performed by the user on the feature configuration interface for the plurality of feature candidates, determine a target feature used for clustering the corpuses in the corpus set.

The corpus annotation apparatus provided in the second aspect corresponds to the corpus annotation method provided in the first aspect. Therefore, for technical effects of the corpus annotation apparatus in any one of the second aspect and the possible implementations of the second aspect, refer to technical effects of the first aspect and corresponding implementations of the first aspect. Details are not described herein again.

According to a third aspect, this application provides a computer device. The computer device includes a processor and a memory. The memory is configured to store instructions. When the computer device runs, the processor executes the instructions stored in the memory, to enable the computer device to perform the corpus annotation method in any one of the first aspect or the possible implementations of the first aspect. It should be noted that the memory may be integrated into the processor, or may be independent of the processor. The computer device may further include a bus. The processor is connected to the memory through the bus. The memory may include a readable memory and a random access memory.

According to a fourth aspect, this application provides a computer-readable storage medium. The computer-readable storage medium stores instructions. When the instructions are runs on a computer device, the computer device is enabled to perform the method according to any one of the first aspect or the implementations of the first aspect.

According to a fifth aspect, this application provides a computer program product including instructions. When the computer program product runs on a computer device, the computer device is enabled to perform the method according to any one of the first aspect or the implementations of the first aspect.

Based on the implementations provided in the foregoing aspects, this application may be further combined to provide more implementations.

### BRIEF DESCRIPTION OF DRAWINGS

To describe the technical solutions in embodiments of this application more clearly, the following briefly describes the accompanying drawings used for describing embodiments. Apparently, the accompanying drawings in the following descriptions show merely some embodiments of this application. For a person of ordinary skill in the art, other accompanying drawings may also be obtained from these accompanying drawings.
FIG. 1 is a schematic diagram of an architecture of a corpus annotation system;
FIG. 2 is a schematic flowchart of a corpus annotation method according to an embodiment of this application;
FIG. 3 is a schematic diagram of an example of a semantic category configuration interface according to an embodiment of this application;
FIG. 4 is a schematic diagram of an example of a user annotation interface according to an embodiment of this application;
FIG. 5 is a schematic diagram of an example of an annotation result display interface according to an embodiment of this application;
FIG. 6 is a schematic diagram of a change of a semantic distance between an anchor and a negative sample, and a change of a semantic distance between an anchor and a positive sample, which are calculated before and after AI model optimization; and
FIG. 7 is a schematic structural diagram of a computer device 700 according to an embodiment of this application.

### DESCRIPTION OF EMBODIMENTS

In the specification, claims, and accompanying drawings of this application, the terms "first", "second", and the like are intended to distinguish between similar objects but do not necessarily describe a specific order or sequence. It should be understood that the terms used in this way may be interchanged in proper cases. This is merely a distinguishing manner used to describe objects with a same attribute in embodiments of this application.

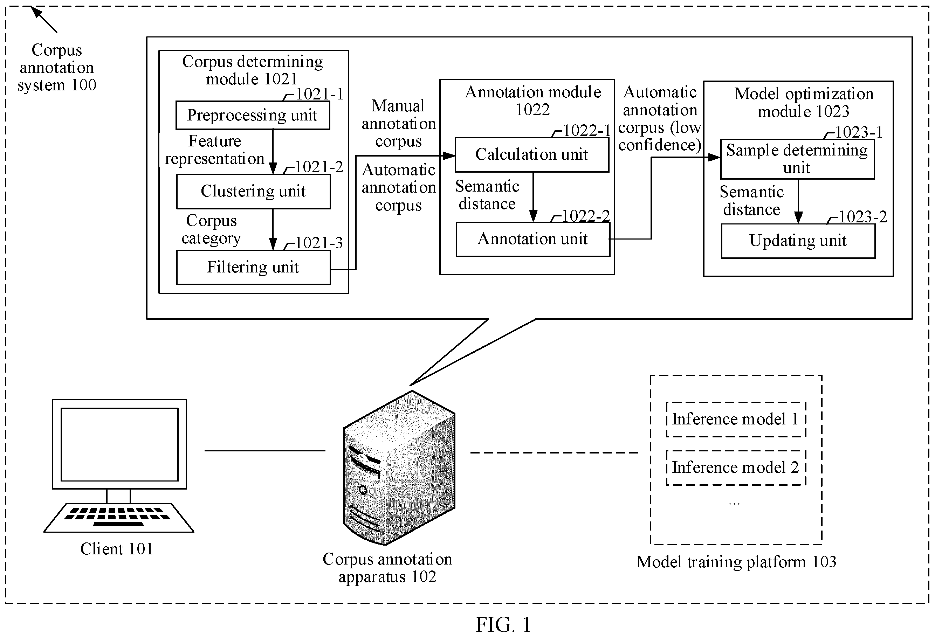

FIG. 1 is a specific architecture of a corpus annotation system. As shown in FIG. 1, the corpus annotation system 100 includes a client 101 and a corpus annotation apparatus 102, and data communication may be performed between the client 101 and the corpus annotation apparatus 102. In FIG. 1, an example in which the corpus annotation system 100 includes one client is used for description. In an actual application, the corpus annotation system 100 may include at least two (including two) clients, to provide a corpus annotation service for different users based on different clients.

The client 101 may be, for example, a web browser provided externally by the corpus annotation apparatus 102 for interacting with a user (such as a domain expert). Alternatively, the client 101 may be an application (application), for example, a software development kit (software development kit, SDK) of the corpus annotation apparatus 102, running on a user terminal. The corpus annotation apparatus 102 may be a computer program running on a computing device, or may be a computing device such as a server, where the computer program is run on the computing device. Alternatively, the corpus annotation apparatus 102 may be a device implemented by using an application-specific integrated circuit (application-specific integrated circuit, ASIC), a programmable logic device (programmable logic device, PLD), or the like. The PLD may be implemented by a complex programmable logic device (complex programmable logical device, CPLD), a field-programmable gate array (field-programmable gate array, FPGA), a generic array logic (generic array logic, GAL), or any combination thereof.

In a conventional corpus annotation system, if a user manually annotates all corpuses, generating an annotated corpus is time-consuming and has high labor costs. Therefore, embodiments of this application provide a corpus annotation method, to reduce time consumed for generating the annotated corpus and reduce labor costs. Specifically, the corpus annotation apparatus 102 first obtains a corpus set provided by the user through the client 101. The corpus set includes a plurality of semantic categories of corpuses that the user expects to annotate, such as a movie and television semantic category of corpuses, a medical semantic category of corpuses, a motion semantic category of corpuses, and the like. Then, the corpus annotation apparatus 102 determines, for any category of corpuses (hereinafter referred to as a target semantic category) in the corpus set, a manual annotation corpus and an automatic annotation corpus falling within the target semantic category in the corpus set, and sends the manual annotation corpus to the client 101. The client 101 presents the manual annotation corpus to the user, obtains a manual annotation result of the user for the manual annotation corpus, and sends the manual annotation result to the corpus annotation apparatus 102, so that the corpus annotation apparatus 102 automatically annotates the automatic annotation corpus based on the manual annotation result of the manual annotation corpus, and subsequently trains an inference model by using the manual annotation result and an automatic annotation result. In embodiments, for corpuses of each semantic category, the corpus annotation apparatus 102 may automatically annotate remaining corpuses of the semantic category based on manual annotation results of some corpuses of the semantic category.

In this way, in the process of generating the annotation corpus, the corpus annotation apparatus 102 automatically annotates the remaining corpuses based on the manual annotation results of these corpuses. This can not only shorten time consumed for generating the annotation corpus and improve efficiency of generating the annotation corpus, but also can reduce labor costs.

In addition, the corpus annotation apparatus 102 automatically annotates a corpus by using a semantic category that the corpus falls within as a granularity. Therefore, for a plurality of corpuses under each semantic category, domain experts may only need to manually annotate a small quantity of corpuses under the semantic category, and remaining corpuses under the semantic category are automatically annotated. In this case, a quantity of corpuses manually annotated by the domain experts can be reduced to dozens or hundreds, effectively reducing the quantity of the manually annotated corpuses.

Further, the corpus annotation system 100 may further include a model training platform 103, and one or more inference models may be configured in the model training platform 103. In FIG. 1, an example in which the model training platform 103 includes an inference model 1 and an inference model 2 is used for description. In an actual application, any quantity of inference models may be deployed on the model training platform 103. When the model training platform 103 includes a plurality of inference models, the plurality of inference models may be for a plurality of different users (tenants) respectively. For example, the inference model 1 is for a user 1, the inference model 2 is for a user 2, and so on. Correspondingly, after the corpus annotation apparatus 102 automatically annotates the automatic annotation corpus based on the manual annotation result, the inference model on the model training platform 103 may further be trained by using the manual annotation result corresponding to the manual annotation corpus and the automatic annotation result corresponding to the automatic annotation corpus.

In an actual application, the corpus annotation system 100 shown in FIG. 1 may be deployed in a cloud, for example, deployed in a public cloud, an edge cloud, a distributed cloud, or the like. Therefore, the corpus annotation system 100 may provide a cloud service of the automatic annotation corpus for the user. Alternatively, the corpus annotation system 100 shown in FIG. 1 may be deployed locally. In this case, the corpus annotation system 100 may provide a local corpus annotation service for the user. In embodiments, a specific deployment scenario and an application scenario of the corpus annotation system 100 are not limited.

In addition, it should be noted that, the corpus annotation system 100 shown in FIG. 1 is described merely as an example, instead of limiting a specific implementation of the corpus annotation system. For example, in another possible implementation, the corpus annotation system 100 may further include more apparatuses, to support more other functions of the corpus annotation system 100. Alternatively, a client included in the corpus annotation system 100 is not limited to the client 101 shown in FIG. 1, and may further include more clients and the like. Alternatively, the corpus annotation system 100 may be externally connected to the model training platform 103. To be specific, the model training platform 103 may be deployed independently of the corpus annotation system 100.

For ease of understanding, the following describes embodiments of this application with reference to the accompanying drawings.

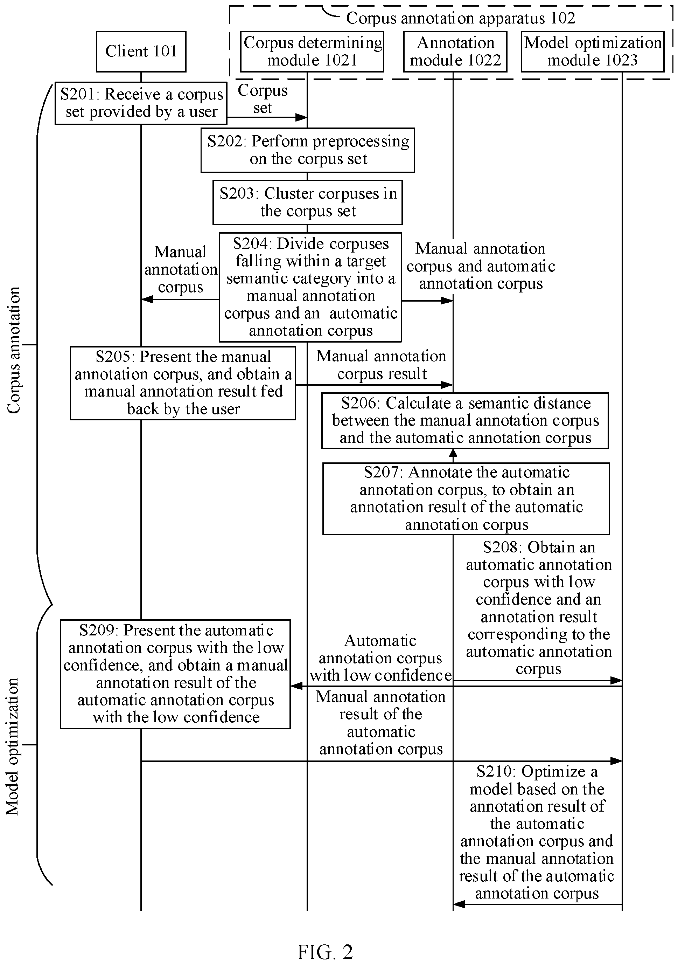

FIG. 2 is a schematic flowchart of a corpus annotation method according to an embodiment of this application. The corpus annotation method shown in FIG. 2 may be applied to the corpus annotation system 100 shown in FIG. 1, or may be applied to another applicable corpus annotation system. For ease of description, in embodiments, the corpus annotation system 100 shown in FIG. 1 is used as an example for description. It should be noted that the corpus annotation apparatus 102 shown in FIG. 1 may specifically include a corpus determining module 1021, an annotation module 1022, and a model optimization module 1023. The corpus determining module 1021 includes a preprocessing unit 1021-1, a clustering unit 1021-2, and a filtering unit 1021-3. The annotation module 1022 includes a calculation unit 1022-1 and an annotation unit 1022-2. The model optimization module 1023 includes a sample determining unit 1023-1 and an updating unit 1023-2. For details about functions of modules and units in the corpus annotation apparatus 102 shown in FIG. 1, refer to related descriptions in the following embodiments.

Based on the corpus annotation system 100 shown in FIG. 1, the corpus annotation method shown in FIG. 2 may specifically include the following steps.

S201: The client 101 receives a corpus set provided by a user. The corpus set includes a plurality of semantic categories of corpuses that the user expects to annotate.

The corpus set provided in this embodiment of this application may include a plurality of semantic categories of to-be-annotated corpuses, such as a movie and television semantic category of corpuses, a medical semantic category of corpuses, a motion semantic category of corpuses, and the like. In addition, the corpus may be in forms such as a text, an audio, and a video, and the like. This is not limited in this embodiment. For ease of understanding, the following describes an example in which the corpus annotation apparatus 102 annotates a corpus in a text form.

In an actual application, the client 101 may present an import interface for the corpus set to the user, so that the user may perform a corresponding operation on the import interface, to provide the corpus set for the client 101. For example, the user may enter a uniform resource locator (uniform resource locator, URL) of the corpus set on the client 101, so that the client 101 may obtain the corpus set and the like based on the URL.

After obtaining the corpus set, the client 101 may send the corpus set to the corpus annotation apparatus 102, so that the corpus annotation apparatus 102 performs corresponding processing on the corpus set. In this embodiment, the corpus annotation apparatus 102 may determine, for any semantic category of corpuses (hereinafter referred to as a target semantic category) in the corpus set, a manual annotation corpus and an automatic annotation corpus falling within the target semantic category. A quantity of determined manual annotation corpuses may be less than a quantity of automatic annotation corpuses. Certainly, this is not limited in this embodiment. For example, the corpus annotation apparatus 102 may determine the manual annotation corpus and the automatic annotation corpus under each semantic category in the corpus set based on a process described in the following step S202 to step S204.

S202: The corpus determining module 1021 preprocesses the corpus set.

In an actual application, a series of preprocessing may be performed on the corpus set based on an actual data condition of the corpus set, and preprocessing operations may be any one or more of the following: sentence segmentation, word segmentation, part-of-speech tagging, syntactic parsing, keyword extraction, and a custom template or rule processing. It should be noted that one or more types of preprocessing may be performed on the corpus set, or no preprocessing may be performed on the corpus set.

The following specifically describes the preprocessing operations that may be used for corpuses in the corpus set according to this embodiment of this application.
(1) The word segmentation and/or sentence segmentation is performed on the corpuses in the corpus set. For example, in the case that the corpus is a segment including a plurality of sentences, sentence segmentation may be performed on the corpus, to segment a corpus A into a sentence A1, a sentence A2, and a sentence A3. In the case that the corpus is segmented into a plurality of sentences or the corpus is a sentence, the word segmentation may be performed on the corpus, to segment the sentence A1 into a word A11, a word A12, and a word A13.
(2) The part-of-speech tagging (part-of-speech tagging, POS tagging) is performed on the corpuses in the corpus set. To be specific, a part of speech of a word is tagged based on meaning and context of the word. For example, for the part-of-speech tagging of a corpus "Zhang(1) San(1) eats an apple", "Zhang(1) San(1)" is tagged as a noun, "eats" is tagged as a verb, "an" is tagged as a quantifier, and "apple" is tagged as a noun.
(3) The syntactic parsing (parsing) is performed on the corpuses in the corpus set. To be specific, a lexical grammatical function of the sentence in the corpus is analyzed. For example, for the syntactic parsing performed on a corpus "I am late", "I" can be tagged as a subject, "am" is tagged as a predicate, and "late" is tagged as a complement.
(4) The keyword extraction (keyword extraction) is performed on the corpuses in the corpus set. To be specific, words that can reflect key content of the corpus are extracted from the corpus. For example, the keyword extraction is performed on a corpus such as "Zhang(1) San(1) ate an apple last night", to obtain keywords such as "Zhang(1) San(1)", "ate" and "apple".
(5) The preprocessing is performed on the corpus using the custom template or rule. For example, a template is that X was born in Y X is a name of a person and Y is a name of a place. According to the template, in a corpus "Zhang(1) San(1) was born in city B", "Zhang(1) San(1)" is tagged as a name of a person, and "city B" is tagged as a name of a place.

In a specific implementation, the corpus determining module 1021 may include the preprocessing unit 1021-1, and the preprocessing unit 1021-1 performs the preprocessing operation on the corpuses in the corpus set.

In this embodiment, after preprocessing the corpuses in the corpus set, the corpus determining module 1021 may further process the corpuses in the corpus set, to automatically annotate the corpuses.

S203: The corpus determining module 1021 clusters the corpuses in the corpus set, to obtain a plurality of semantic categories of corpuses.

In a specific implementation, the corpus determining module 1021 may extract a feature of the corpus in a dimension based on a preprocessing result generated by each preprocessing operation, to obtain features of the corpuses in the corpus set in one or more dimensions. For example, when the corpus determining module 1021 performs the part-of-speech tagging on the corpus, the corpus determining module 1021 may extract a feature of the corpus in a part-of-speech dimension based on a part-of-speech distribution in the corpus. The extracted feature may be vector represented. For example, the corpus determining module 1021 may extract features of a plurality of dimensions of the corpus based on a plurality of dimensions of preprocessing results that are obtained by performing the word segmentation, the sentence segmentation, the part-of-speech tagging, the syntactic parsing, and the keyword extraction on the corpus and obtained through the custom template. Then, the corpus determining module 1021 divides corpuses with a similar feature in the corpus set into a same semantic category based on the features of one or more dimensions of each corpus. In this way, the corpus determining module 1021 may divide the corpuses in the corpus set into the plurality of semantic categories.

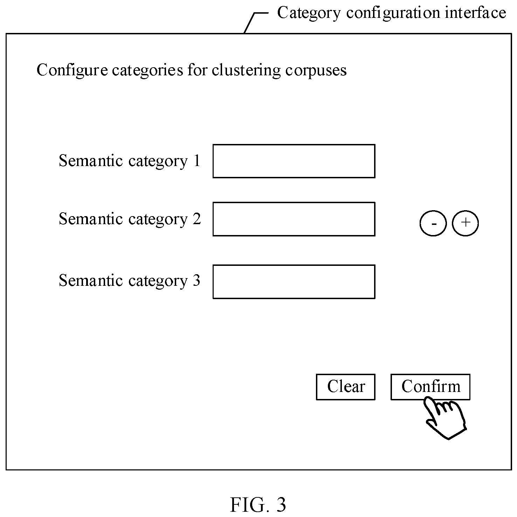

In a possible implementation, a clustering semantic category in this embodiment of this application may be configured by the user. Specifically, the corpus determining module 1021 may further include the clustering unit 1021-2. Before the corpuses in the corpus set are clustered, the clustering unit 1021-2 may present a semantic category configuration interface to the user. For example, the clustering unit 1021-2 may present the semantic category configuration interface to the user through the client 101, as shown in FIG. 3, allowing the user to configure the semantic category on the semantic category configuration interface. For example, the user selects or enters a semantic category 1, a semantic category 2, and a semantic category 3 on the semantic category configuration interface. In this way, the clustering unit 1021-2 may determine, in response to a configuration operation performed by the user on the semantic category configuration interface, a plurality of semantic categories that the corpuses in the corpus set respectively fall within, and cluster the corpuses in the corpus set based on the plurality of semantic categories configured by the user. In this way, the corpuses in the corpus set can be divided into the plurality of semantic categories. In an actual application, the user may also enter, on the semantic category configuration interface, words or sentences falling within each semantic category, to indicate different semantic categories by using these words and sentences. For example, the user may enter a word a and a word b (or a sentence a and a sentence b) on the semantic category configuration interface to represent the semantic category 1, and enter a word c and a word d (or a sentence c and a sentence d) to represent the semantic category 2, and the like. Alternatively, the user may enter names of the plurality semantic categories, the words or the sentences falling within each semantic category, and the like. This is not limited in this embodiment.

In another possible implementation, the plurality of semantic categories in this embodiment of this application may alternatively be automatically generated based on the corpuses in the corpus set. In an example, the clustering unit 1021-2 may automatically cluster the corpuses in the corpus set. For example, the clustering unit 1021-2 may automatically cluster the corpuses by using a preset cluster algorithm, to automatically divide the corpuses in the corpus set into the plurality of semantic categories. Further, the clustering unit 1021-2 may further present the plurality of clustered semantic categories to the user. For example, the clustering unit 1021-2 presents the plurality of semantic categories to the user through the client 101.

In an example, the clustering unit 1021-2 may respectively divide the corpus in the corpus set into each semantic category based on a feature of at least one dimension corresponding to the corpus (obtained through preprocessing and feature extraction of the corpus by using the foregoing preprocessing unit 1021-1). A feature used by the clustering unit 1021-2 to cluster the corpus may be determined by the user. For example, before clustering the corpuses in the corpus set, the clustering unit 1021-2 may present a feature configuration interface to the user. For example, the clustering unit 1021-2 may present the feature configuration interface to the user through the client 101. The feature configuration interface may include a plurality of feature candidates, so that the user configures a feature on the feature configuration interface. For example, the feature configuration interface may provide options of a feature 1, a feature 2, and a feature 3 for the user. Then, the clustering unit 1021-2 determines, in response to a selection operation performed by the user on the feature configuration interface for the plurality of feature candidates (the feature 1, the feature 2, and the feature 3), a feature selected by the user as a target feature used for clustering the corpuses in the corpus set. In an example, on the feature configuration interface presented by the clustering unit 1021-2, the target feature determined from the feature candidates may be one or more features. The clustering unit 1021-2 clusters the corpuses in the corpus set based on the target feature selected by the user.

S204: The corpus determining module 1021 divides corpuses falling within the target semantic category into the manual annotation corpus and the automatic annotation corpus. The target semantic category is any of the plurality of semantic categories.

In an actual application, the corpus determining module 1021 may include the filtering unit 1021-3. The filtering unit 1021-3 may automatically divide the corpuses falling within the target semantic category into the manual annotation corpus and the automatic annotation corpus. Specifically, the filtering unit 1021-3 may automatically divide the corpuses falling within the target semantic category into the manual annotation corpus and the automatic annotation corpus by using a random algorithm. Alternatively, the filtering unit 1021-3 may divide the target semantic category of corpuses based on a predetermined rule. In another implementation, the filtering unit 1021-3 may further send the target semantic category of corpuses to the client 101 and present the target semantic category of corpuses, and manually divide the target semantic category of corpuses into the manual annotation corpus and the automatic annotation corpus. This is not limited in embodiments of this application.

It should be noted that the manual annotation corpus and the automatic annotation corpus described in this embodiment are mainly used for distinguishing the corpuses. There may be one or more manual annotation corpuses, and there may be one or more automatic annotation corpuses. For ease of describing solutions provided in this embodiment of this application, a corpus set including manual annotation corpuses is referred to as a seed set, and a corpus set including automatic annotation corpuses is referred to as a query set. The seed set is used for manual annotation and used for providing a correct annotation result. The query set is used for automatic annotation by referring to the annotation result in the seed set.

In the corpus annotation method provided in this embodiment of this application, after determining the manual annotation corpus and the automatic annotation corpus falling within the target semantic category in the corpus set, the corpus annotation apparatus 102 may automatically annotate the automatic annotation corpus based on the manual annotation result of the user for the manual annotation corpus. This is described in detail below.

S205: The client 101 presents the manual annotation corpus to the user, and obtains the manual annotation result, fed back by the user, of the manual annotation corpus.

In a specific implementation, the corpus determining module 1021 may send the manual annotation corpus under the target semantic category to the client 101. The client 101 presents the manual annotation corpus to the user, and obtains the manual annotation result of the user for the manual annotation corpus. In an example, when the corpus annotation method provided in this embodiment of this application is used for performing a tuple annotation on a corpus, tuple information annotated by the user for the manual annotation corpus includes a subject, a predicate, a relationship type between the subject and predicate.

In a further possible implementation, the information about the tuple annotation performed by the user on the manual annotation corpus may further include a subject type of the corpus and a predicate type of the corpus. This is not limited in this embodiment of this application. The following describes the solutions provided in embodiments of this application by using a user annotation interface in which the tuple information includes the subject, the subject type, the predicate, the predicate type, and the relationship type between the subject and the predicate as an example.

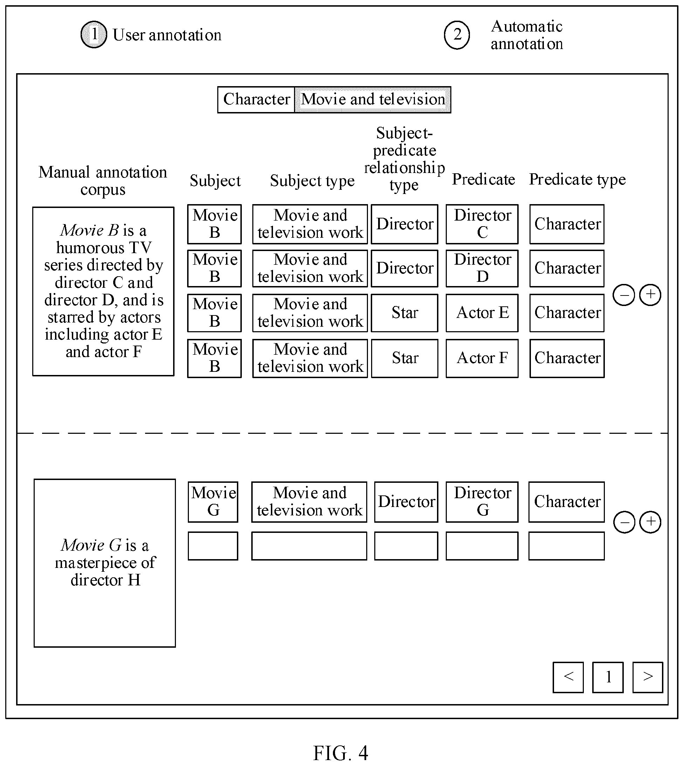

FIG. 4 is a schematic diagram of a user annotation interface according to an embodiment of this application.

In the user annotation interface provided in this embodiment of this application, a semantic category that needs to be annotated may be selected to be displayed, such as a character semantic category of corpuses or a movie and television semantic category of corpuses. In FIG. 4, the movie and television semantic category of corpuses is used as an example to describe the user annotation interface provided in this embodiment of this application.

In the user annotation interface provided in this embodiment of this application, a manual annotation corpus (a seed set) is displayed in a display box corresponding to a to-be-annotated text. A subject (a subject), a subject type (a subject type), a predicate (a predicate), a predicate type (a predicate type), and a relationship type (a subject-predicate relationship) that is between the subject and the predicate and that corresponds to the corpus may be input into an annotation information input box corresponding to the manual annotation corpus. It should be noted that the display box corresponding to the to-be-annotated text may alternatively be an input box. That is, the seed set provided in this embodiment of this application may be entered by a user or automatically selected by a computer. Each corpus in the seed set corresponds to a display box of a to-be-annotated text, and a display box of each to-be-annotated text corresponds to one or more pieces of annotation information. The user may adjust, by using a key next to the annotation information input box, an amount of annotation information corresponding to the to-be-annotated text.

As shown in FIG. 4, a corpus 1 "*Movie B* is a humorous TV series directed by director C and director D, and is starred by actors including actor E and actor F" corresponds to four pieces of annotation information. A first piece of annotation information is a subject "Movie B", a subject type "movie and television work", a subject-predicate relationship type "directed", a predicate "director C", and a predicate type "character". A second piece of annotation information is the subject "Movie B", the subject type "movie and television work", the subject-predicate relationship type "directed", a predicate "director D", and the predicate type "character". A third piece of annotation information is the subject "Movie B", the subject type "movie and television work", a subject-predicate relationship type "starred", a predicate "actor E", and the predicate type "character". A fourth piece of annotation information is the subject "Movie B", the subject type "movie and television work", the subject-predicate relationship type "starred", a predicate "actor F", and the predicate type "character".

A corpus 2 "Movie G is a masterpiece of director H" corresponds to a piece of annotation information: a subject "Movie G", a subject type "movie and television work", a subject-predicate relationship type "directed", a predicate "director G", and a predicate type "character".

It should be noted that the two corpuses provided in this embodiment of this application are merely examples. In the user annotation interface provided in this embodiment of this application, more corpuses in the seed set may be displayed by a page turn key. In an actual application, a seed set of each type of corpus that needs to be annotated may include one to ten corpuses.

In the corpus annotation method provided in embodiments of this application, after obtaining the manual annotation result of the manual annotation corpus, the client 101 sends the manual annotation result to the annotation module 1022. Then, the annotation module 1022 may automatically annotate the automatic annotation corpus based on the manual annotation result. The following specifically describes the foregoing method provided in this embodiment of this application by using step S206 and step S207 as an example.

S206: The annotation module 1022 calculates a semantic distance between the manual annotation corpus and the automatic annotation corpus.

The semantic distance in this embodiment of this application is a distance between two corpuses in semantic space. The smaller the semantic distance between the two corpuses, the higher a semantic similarity between the two corpuses. Conversely, the larger the semantic distance between the two corpuses, the lower the semantic similarity between the two corpuses.

In a possible implementation, the annotation module 1022 may include the calculation unit 1022-1. For example, the calculation of the semantic distance between the manual annotation corpus and the automatic annotation corpus is used as an example. The calculation unit 1022-1 may calculate, based on a first vectorized feature corresponding to the manual annotation corpus and a second vectorized feature corresponding to the automatic annotation corpus, the semantic distance between the manual annotation corpus and the automatic annotation corpus. It should be noted that the first vectorized feature corresponding to the manual annotation corpus may be generated based on a word, a sentence, a part-of-speech tag, a syntactic parsing result, and an obtained keyword that are obtained during preprocessing of the manual annotation corpus and through a manner such as extraction by using a custom template. Similarly, the second vectorized feature corresponding to the automatic annotation corpus may also be generated based on the word, the sentence, the part-of-speech tag, the syntactic parsing result, and the obtained keyword, that are obtained during preprocessing of the automatic annotation corpus and through a manner such as extraction by using a custom template. It should be noted that, in an actual application, both the manual annotation corpus and the automatic annotation corpus may include a plurality of corpuses. In this case, the calculation unit 1022-1 may separately calculate a semantic distance between each manual annotation corpus and each automatic annotation corpus.

In an implementation example, the calculation unit 1022-1 may calculate a magnitude of a vector difference between the first vectorized feature and the second vectorized feature (that is, a vector distance between the two vectorized features), and use the magnitude as the semantic distance between the manual annotation corpus and the automatic annotation corpus. In an actual application, the calculation unit 1022-1 may also calculate the semantic distance between the two corpuses by using another algorithm. This is not limited in this embodiment. It should be understood that the higher the semantic similarity between the manual annotation corpus and the automatic annotation corpus, the smaller the semantic distance between the manual annotation corpus and the automatic annotation corpus. For example, it is assumed that a manual annotation corpus is "Zhang(1) San(1) was born in city B", and an automatic annotation corpus includes "Li(3) Si(4) was born in city C" and "Li(3) Si(4) likes to eat apples", a semantic distance between the manual annotation corpus "Zhang(1) San(1) was born in city B" and the automatic annotation corpus "Li(3) Si(4) was born in city C" is a, and a semantic distance between the manual annotation corpus "Zhang(1) San(1) was born in city B" and the automatic annotation corpus "Li(3) Si(4) likes to eat apples" is b. Because "Zang(1) San(1) was born in city B and "Li(3) Si(4) was born in city C are more semantically similar, the semantic distance a is smaller than the semantic distance b.

S207: The annotation module 1022 annotates the automatic annotation corpus based on the semantic distance between the manual annotation corpus and the automatic annotation corpus, and the manual annotation result, to obtain an annotation result of the automatic annotation corpus.

In this embodiment of this application, the annotation module 1022 may further include the annotation unit 1022-2. In a possible implementation, in a process in which the annotation unit 1022-2 annotates the automatic annotation corpus, specifically, when the semantic distance between the manual annotation corpus and the automatic annotation corpus satisfies a preset condition, the annotation unit 1022-2 annotates the automatic annotation corpus based on the manual annotation result of the manual annotation corpus, a syntax structure of the manual annotation corpus, and a syntax structure of the automatic annotation corpus. For example, it is assumed that the manual annotation corpus is "Zhang(1) San(1) was born in city B", a manual annotation result is "Zhang(1) San(1) -> name of a person, city B -> location", the automatic annotation corpus is "Li(3) Si(4) was born in city C", the syntax structure of the manual annotation corpus is a "subject-predicate-object" structure, that is, a subject is "Zhang(1) San(1)", a predicate is "was born", and an object is "city B", and the syntax structure of the automatic annotation corpus is also the "subject-predicate-object" structure, that is, a subject is "Li(3) Si(4)", a predicate is "was born", and an object is "city C". Then, when the semantic distance between the two corpuses satisfies the preset condition, the annotation unit 1022-2 may automatically annotate the subject "Li(3) Si(4)" in the corpus "Li(3) Si(4) was born in city C" as a character based on the manual annotation result "character" for the subject "Zhang(1) San(1)", and annotate the object "city C" in the automatic annotation corpus as a location based on the manual annotation result "location" for the object "city B". In another implementation, the annotation unit 1022-2 may further automatically annotate the automatic annotation corpus with reference to context semantic respectively corresponding to the manual annotation corpus and the automatic annotation corpus. For example, it is determined, based on the context semantic of the manual annotation corpus and the automatic annotation corpus, to use a manual annotation result of a specific word in the manual annotation corpus to annotate a corresponding word in the automatic annotation corpus. This is not limited in this embodiment.

In an example, the preset condition may be a preset value, that is, the annotation unit 1022-2 may sequentially and separately calculate a semantic distance between each manual annotation corpus in the seed set and a to-be-annotated automatic annotation corpus. When a semantic distance between one manual annotation corpus and the automatic annotation corpus is less than the preset value, the annotation unit 1022-2 determines the manual annotation result of the manual annotation corpus as the annotation result of the automatic annotation corpus.

For example, it is assumed that the seed set includes a manual annotation corpus 1, a manual annotation corpus 2, and a manual annotation corpus 3. For an automatic annotation corpus A in the query set, the annotation unit 1022-2 may sequentially and separately calculate semantic distances between the manual annotation corpus 1, the manual annotation corpus 2, and the manual annotation corpus 3 and the automatic annotation corpus A. When a semantic distance between the manual annotation corpus 1 and the automatic annotation corpus A is less than the preset value, the annotation unit 1022-2 may directly determine a manual annotation result of the manual annotation corpus 1 as the annotation result of the automatic annotation corpus A. In this case, the annotation unit 1022-2 may not need to continue to separately calculate semantic distances between the manual annotation corpus 2, the manual annotation corpus 3, and the automatic annotation corpus A. When the semantic distance between the manual annotation corpus 1 and the automatic annotation corpus A is greater than the preset value, the annotation unit 1022-2 may continue to calculate the semantic distance between the manual annotation corpus 2 and the automatic annotation corpus A, and determine, based on the semantic distance between the manual annotation corpus 2 and the automatic annotation corpus A, whether to determine a manual annotation result of the manual annotation corpus 2 as the annotation result of the automatic annotation corpus A, and so on, until the annotation of the automatic annotation corpus A is completed.

In another possible implementation, the preset condition satisfied by the semantic distance may also be the semantic distance between the manual annotation corpus and the automatic annotation corpus, and is a minimum value of semantic distances between each of the manual annotation corpuses in the seed set and the automatic annotation corpus. In a specific implementation, the annotation unit 1022-2 may separately calculate a semantic distance between each manual annotation corpus in the seed set and one automatic annotation corpus, determine, by comparing the semantic distance, a manual annotation corpus in the seed set that has a minimum semantic distance from the automatic annotation corpus, and determine the manual annotation result of the manual annotation corpus as the annotation result of the automatic annotation corpus.

For example, it is assumed that the seed set includes the manual annotation corpus 1, the manual annotation corpus 2, and the manual annotation corpus 3. For the automatic annotation corpus A in the query set, the annotation unit 1022-2 may separately calculate semantic distances between the manual annotation corpus 1, the manual annotation corpus 2, and the manual annotation corpus 3, and the automatic annotation corpus A, and when determining through comparison that the semantic distance between the manual annotation corpus 2 and the automatic annotation corpus A is the shortest, the annotation unit 1022-2 determines the manual annotation result of the manual annotation corpus 2 as the annotation result of the automatic annotation corpus A.

In this embodiment, a type of annotation information in the annotation result of the automatic annotation corpus may correspond to a type manually annotated in the manual annotation corpus. For example, when the information annotated by the user on the manual annotation corpus is tuple information and the tuple information includes the subject of the corpus, the predicate of the corpus, the relationship type between the subject of the corpus and the predicate of the corpus, the annotation result of automatic annotation corpus may also include the subject of the corpus, the predicate of the corpus, the relationship type between the subject of the corpus and the predicate of the corpus.

With reference to the accompanying drawings, the following describes the corpus annotation method provided in embodiments of this application by using an example in which a computer performs tuple information annotation on the automatic annotation corpus.

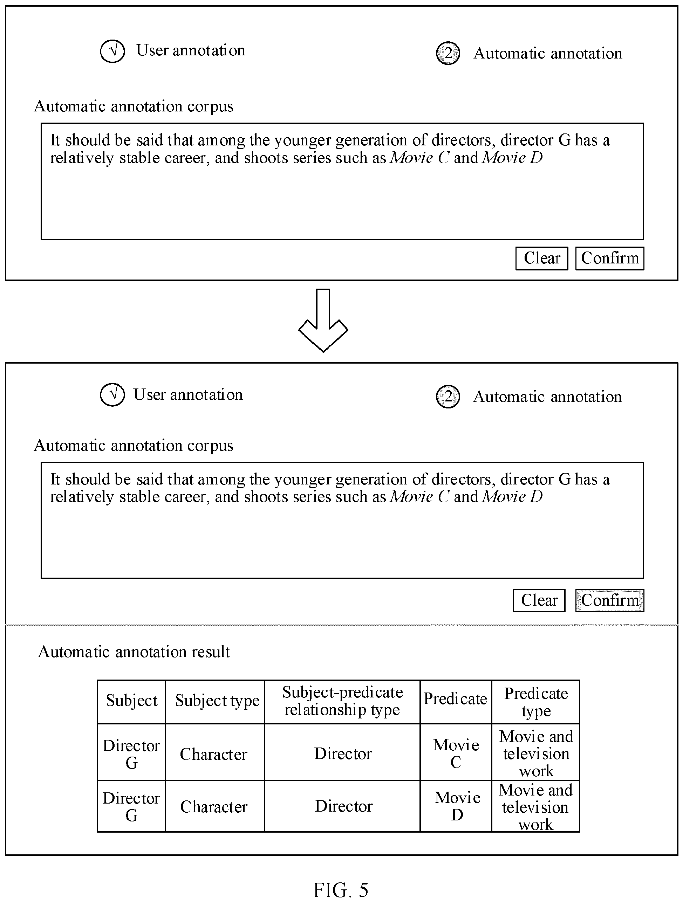

FIG. 5 is a schematic diagram of an annotation result display interface according to an embodiment of this application.

As shown in FIG. 5, an automatic annotation corpus is "It should be said that among the younger generation of directors, director G has a relatively stable a career, and shoots series such as *Movie C* and *Movie D."* After a user clicks a confirm key, the following displays an automatic annotation result (relationship extraction) of the corpus: a subject "director G", a subject type "character", a subject-predicate relationship type "directed", a predicate "Movie C", and a predicate type "movie and television work". An annotation result corresponding to the automatic annotation corpus is obtained based on a manual annotation result of a manual annotation corpus. For example, if the manual annotation corpus is "Director C directs a humorous TV series such as Movie B, and is starred by actor E, actor F, and the like", and the manual annotation result of the corpus is a subject "director C", a subject type "character", a subject-predicate relationship type "directs", a predicate "Movie B", and a predicate type "movie and television work". Because the automatic annotation corpus and the manual annotation corpus are semantically similar (a semantic distance is short), an annotation result of the "Movie B" is determined as an annotation result of the "Movie C" in the automatic annotation corpus, that is, the annotation result of the "Movie C" includes the predicate "Movie C" and the predicate type "movie and television work", as shown in FIG. 5.

In a further possible implementation, after automatic annotation of the automatic annotation corpus is completed, a corpus annotation apparatus 102 may further use the manual annotation result corresponding to the manual annotation corpus and an automatic annotation result corresponding to the automatic annotation corpus to train one or more inference models on a model training platform 103.

In an implementation example, at least one inference model for the user may be configured on the model training platform 103, and the inference model is trained based on one or more groups of training data. Therefore, the user may provide the corpus set for the corpus annotation apparatus 102 through the client 101, so that the corpus annotation apparatus 102 completes annotation of the corpuses in the corpus set based on the foregoing implementation. Then, the model training platform 103 may train the one or more inference models of the user by using the manual annotation result and the automatic annotation result, to obtain an inference model expected by the user.

However, in another implementation example, after automatically annotating the corpuses in the corpus set provided by the user, the corpus annotation apparatus 102 may construct a training data set based on the manual annotation result and the automatic annotation result. In an actual application, the user may provide a plurality of different corpus sets for the corpus annotation apparatus 102 through the client 101. The corpus annotation apparatus 102 automatically annotates the corpuses in the plurality of corpus sets. Therefore, a plurality of different training data sets are generated based on annotation results corresponding to the plurality of different corpus sets. In this way, when another user has a requirement of training the inference model on the model training platform 103, the another user may select at least one corpus set from a plurality of corpus sets (that is, the training data sets) on which corpus annotation is completed, to perform model training. Therefore, the corpus annotation apparatus 102 may train the inference model of the another user based on the manual annotation result and the automatic annotation result that correspond to a corpus set selected by the another user.

It should be noted that in the foregoing two implementation examples, an example in which the corpus annotation apparatus 102 trains the inference model is used for description. In another possible implementation, when the model training platform 103 is deployed independently of the corpus annotation system 100, the corpus annotation apparatus 102 may alternatively send, to the model training platform 103, the corpus set on which the annotation is completed. Therefore, the model training platform 103 trains at least one inference model by using the corpus set on which the annotation is completed.

It should be noted that in an actual application, the corpus annotation method provided in the foregoing embodiment may be encapsulated into a model for specific implementation. Specifically, method steps performed in step S202 to step S204 and step S206 and step S207 in the foregoing embodiment may be performed through the model. In an example, the calculation unit 1022-1 provided in embodiments of this application may perform processes such as preprocessing, clustering, and calculation of a semantic distance between corpuses by using an artificial intelligence (Artificial Intelligence, AI) model.

When semantic distances between different corpuses are calculated by using the AI model, the corpus annotation apparatus 102 may further obtain a manual check result for the annotation result of the automatic annotation corpus. In addition, when the manual check result indicates that the annotation result of the automatic annotation corpus is incorrect, the corpus annotation apparatus 102 updates the AI model by using the automatic annotation corpus and the manual check result. In addition, a semantic distance that is between the manual annotation corpus and the automatic annotation corpus and that is calculated by using the updated AI model no longer satisfies the foregoing preset condition. When the annotation result of the automatic annotation corpus does not match the manual annotation result, the manual check result indicates that the automatic annotation corpus is incorrectly annotated.

In embodiments of this application, the annotation result of the automatic annotation corpus may include confidence. That the corpus annotation apparatus 102 obtains the manual check result for the annotation result of the automatic annotation corpus may specifically include: When the confidence of the automatic annotation corpus is less than a confidence threshold, the corpus annotation apparatus 102 determines that the automatic annotation corpus is a low confidence corpus. In addition, the corpus annotation apparatus 102 may use the manual check result for the annotation result of the automatic annotation corpus to update the AI model. Correspondingly, when the confidence of the automatic annotation corpus is not less than the confidence threshold, the corpus annotation apparatus 102 determines that the automatic annotation corpus is a high confidence corpus. The following specifically describes the foregoing method provided in this embodiment of this application by using step S208 to step S210 as an example.

S208: A model optimization module 1023 obtains an automatic annotation corpus with low confidence and an annotation result corresponding to the automatic annotation corpus.

In embodiments of this application, after the annotation result of the automatic annotation corpus is obtained, the confidence of the automatic annotation corpus is calculated. In a possible implementation, the model optimization module 1023 may include a sample determining unit 1023-1. The sample determining unit 1023-1 may use an automatic annotation corpus with confidence greater than the confidence threshold as a high confidence sample, and an automatic annotation corpus with confidence less than the confidence threshold as a low confidence sample. In a possible implementation, the confidence of the automatic annotation corpus is related to semantic distances between the automatic annotation corpus and a plurality of manual annotation corpuses in the seed set. When a semantic distance between the automatic annotation corpus and only one manual annotation corpus in the seed set is relatively short (for example, shorter than a threshold), and semantic distances between the automatic annotation corpus and other manual annotation corpuses in the seed set are relatively long (for example, longer than the threshold), the sample determining unit 1023-1 may determine that the confidence of the automatic annotation corpus is high, and determine the automatic annotation corpus as a high confidence sample. For a manual annotation corpus in the seed set with the shortest semantic distance from the automatic annotation corpus, when there is another manual annotation corpus in the seed set whose semantic distance from the automatic annotation corpus is close to a semantic distance of a manual annotation corpus with the shortest semantic distance from automatic annotation corpus, the confidence of the automatic annotation corpus is low.

S209: The client 101 presents the automatic annotation corpus with the low confidence to the user, and obtains a manual annotation result of the automatic annotation corpus with the low confidence.

In this embodiment of this application, to obtain a correct annotation result of the automatic annotation corpus with the low confidence, the sample determining unit 1023-1 may send the automatic annotation corpus with the low confidence to the client 101 for presentation. In this way, the user manually annotates the automatic annotation corpus with the low confidence, and compares the manual annotation result of the automatic annotation corpus with the automatic annotation result of the automatic annotation corpus, to obtain the manual check result of the automatic annotation corpus. When the manual check result of the automatic annotation corpus indicates that the automatic annotation corpus is correctly annotated, that is, when the manual annotation result of the automatic annotation corpus matches the automatic annotation result of the automatic annotation corpus, the automatic annotation corpus is classified into a positive sample set. When the manual check result indicates that the automatic annotation corpus is incorrectly annotated, that is, when the manual annotation result of the automatic annotation corpus does not match the automatic annotation result of the automatic annotation corpus, the automatic annotation corpus is classified into a negative sample set. Both the positive sample set and the negative sample set are used to update the AI model.

S210: The model optimization module 1023 optimizes the AI model based on the annotation result of the automatic annotation corpus with the low confidence and the manual annotation result of the automatic annotation corpus with the low confidence.

In embodiments of this application, the model optimization module 1023 may include an updating unit 1023-2. The updating unit 1023-2 may update the AI model by using the manual annotation corpus and the automatic annotation corpus. When the seed set includes the plurality of manual annotation corpuses, one manual annotation corpus in the seed set may be selected as an anchor (an anchor sample), and the anchor and the automatic annotation corpus with the annotation result are used to update the AI model. In an actual application, the updating unit 1023-2 may randomly select one manual annotation corpus in the seed set as the anchor, or may manually select one manual annotation corpus in the seed set as the anchor by the user. This is not limited in embodiments of this application. The following specifically describes a process of updating the AI model with reference to the accompanying drawings.

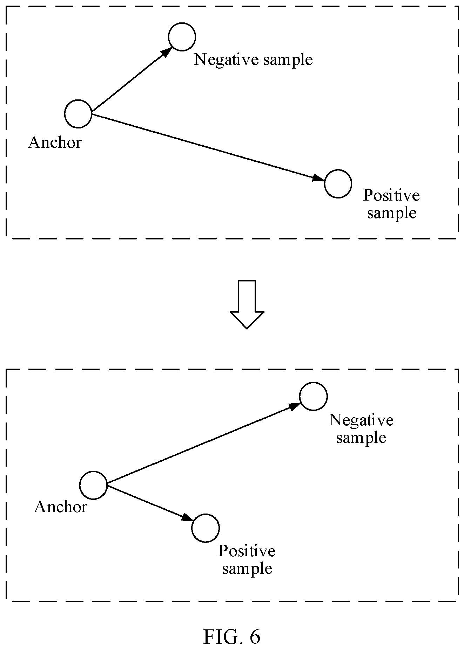

As shown in FIG. 6, in embodiments of this application, the updating unit 1023-2 may use a corpus in the negative sample set as a negative sample, use a corpus in the positive sample set as a positive sample, and train the AI model based on the anchor, the negative sample, and the positive sample, to increase, through model training, a semantic distance that is between the anchor and the negative sample and that is calculated by the AI model, and reduce a semantic distance between the anchor and the positive sample, to optimize the AI model.

In a possible implementation, a semantic distance that is between the anchor and an automatic annotation corpus in the negative sample set and that is calculated by the updating unit 1023-2 through an updated AI model does not satisfy the preset condition satisfied by the semantic distance in the foregoing embodiments. That is, a semantic distance that is between the anchor and the automatic annotation corpus in the negative sample set and that is calculated by the AI model before updating is less than the preset value, and the semantic distance that is between the anchor and the automatic annotation corpus in the negative sample set and that is calculated by the updated AI model is greater than the preset value. Correspondingly, the semantic distance that is between the anchor and the automatic annotation corpus in the positive sample set and that is calculated by the updating unit 1023-2 through the updated AI model satisfies the preset condition in the foregoing embodiments.

In an actual application, a low confidence sample with low confidence in corpuses annotated by the AI model may be presented to the user, and a manual annotation result is obtained. The updating unit 1023-2 compares an annotation result of the AI model with the manual annotation result, and accumulates the positive sample and the negative sample. When the quantity of positive samples and negative samples satisfies an optimization condition, an optimization function of the AI model may be triggered by the user to optimize the AI model. In a possible implementation, the anchor used by the updating unit 1023-2 may be selected by the user as a sample to optimize the AI model for a plurality of times. In another possible implementation, each time the AI model is optimized, the updating unit 1023-2 may randomly select a corpus in the manual annotation corpus as an anchor.

In conclusion, according to the corpus annotation method provided in this embodiment of this application, in a process of generating an annotated corpus, based on manual annotation results of some corpuses, some other corpuses are automatically annotated, so that labor costs are reduced. According to the corpus annotation method provided in embodiments of this application, to-be-annotated corpuses are divided into a plurality of semantic categories, and then each semantic category of corpuses is annotated respectively. In this way, the corpuses in each semantic category have a high similarity, and in an automatic annotation process of automatically annotating each semantic category of corpuses, a few manual annotation examples are required, so that a quantity of manual annotation corpuses can be effectively reduced. In addition, according to the corpus annotation method provided in embodiments of this application, an AI model for annotation may be further automatically optimized, to further improve annotation accuracy.

In the foregoing embodiments, the corpus annotation apparatus 102 in the corpus annotation process may be implemented by a separate hardware device. In another possible implementation, the corpus annotation apparatus 102 may also be software configured on a computer device. In addition, the computer device may separately implement functions of the foregoing corpus annotation apparatus 102 by running the software on the computer device. The following separately describes the corpus annotation apparatus 102 in the corpus annotation process in detail based on a perspective of hardware device implementation.

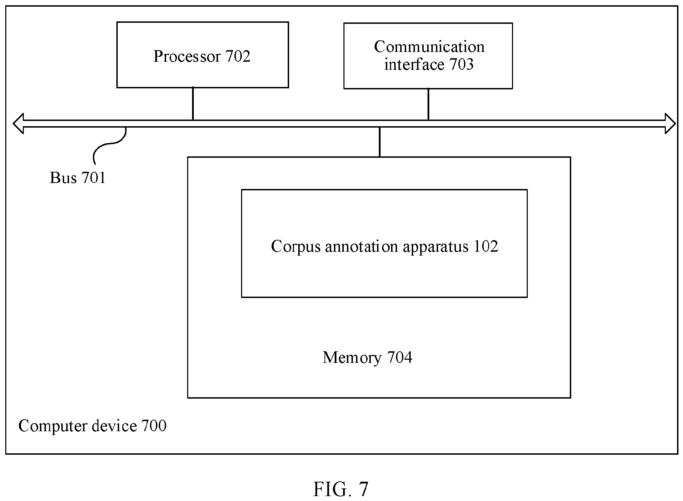

FIG. 7 shows a computer device. The computer device 700 shown in FIG. 7 may be specifically configured to implement the functions of the corpus annotation apparatus 102 in the foregoing embodiments.

The computer device 700 includes a bus 701, a processor 702, a communication interface 703, and a memory 704. The processor 702, the memory 704, and the communication interface 703 communicate with each other through the bus 701. The bus 701 may be a peripheral component interconnect (peripheral component interconnect, PCI) standard bus, an extended industry standard architecture (extended industry standard architecture, EISA) bus, or the like. Buses may be divided into an address bus, a data bus, a control bus, and the like. For ease of representation, only one bold line is used in FIG. 7, but this does not mean that there is only one bus or only one type of bus. The communication interface 703 is configured for external communication, such as receiving a corpus set and a manual annotation result that are sent by a client.

The processor 702 may be a central processing unit (central processing unit, CPU). The memory 704 may include a volatile memory (volatile memory), such as a random access memory (random access memory, RAM). The memory 704 may further include a non-volatile memory (non-volatile memory), such as a read-only memory (read-only memory, ROM), a flash memory, an HDD, or an SSD.

The memory 704 stores executable code, and the processor 702 executes the executable code to perform the method performed by the foregoing corpus annotation apparatus 102.

Specifically, when the embodiment shown in FIG. 2 is implemented, and the corpus annotation apparatus 102 described in the embodiment shown in FIG. 2 is implemented by using software, software or program code required for performing the functions of the corpus annotation apparatus 102 in FIG. 2 is stored in the memory 704. An interaction between the corpus annotation apparatus 102 and another device is implemented by using the communication interface 703. The processor is configured to execute instructions in the memory 704, to implement the method performed by the corpus annotation apparatus 102.

In addition, an embodiment of this application further provides a computer-readable storage medium. The computer-readable storage medium stores instructions. When the instructions are run on a computer device, the computer device is enabled to perform the method performed by the corpus annotation apparatus 102 in the foregoing embodiments.

In addition, an embodiment of this application further provides a computer program product. When the computer program product is executed by a computer, the computer performs any method of the foregoing corpus annotation method. The computer program product may be a software installation package. When any method of the foregoing corpus annotation method needs to be used, the computer program product may be downloaded and performed on the computer.

In addition, it should be noted that the described apparatus embodiment is merely schematic. The units described as separate parts may or may not be physically separate, and parts displayed as units may or may not be physical units, may be located in one position, or may be distributed on a plurality of network units. Some or all of the modules may be selected based on actual requirements to achieve the objectives of the solutions of this embodiment. In addition, in the accompanying drawings of the apparatus embodiment provided in this application, a connection relationship between the modules indicates that there is a communication connection between the modules, and may be specifically implemented as one or more communication buses or signal lines.

Based on the descriptions of the foregoing implementations, a person skilled in the art may clearly understand that this application may be implemented by software and necessary universal hardware, or by dedicated hardware, including a dedicated integrated circuit, a dedicated CPU, a dedicated memory, a dedicated component, or the like. Generally, any function that can be performed by a computer program can be easily implemented by using corresponding hardware. Moreover, a specific hardware structure used to achieve the same function may be in various forms, for example, in a form of an analog circuit, a digital circuit, a dedicated circuit, or the like. However, in this application, a software program implementation is a better implementation in more cases. Based on such an understanding, the technical solutions of this application essentially or the part contributing to the conventional technology may be implemented in a form of a software product. The computer software product is stored in a readable storage medium, for example, a floppy disk, a USB flash drive, a removable hard disk, a ROM, a RAM, a magnetic disk, an optical disc of a computer, or the like, and includes several instructions for instructing a computer device (which may be a personal computer, a training device, a network device, or the like) to perform the method described in embodiments of this application.

All or some of the foregoing embodiments may be implemented by software, hardware, firmware, or any combination thereof. When software is used to implement embodiments, all or some of embodiments may be implemented in a form of a computer program product.

The computer program product includes one or more computer instructions. When the computer program instructions are loaded and executed on a computer, the processes or functions according to embodiments of this application are all or partially generated. The computer may be a general-purpose computer, a dedicated computer, a computer network, or any other programmable apparatus. The computer instructions may be stored in a computer-readable storage medium, or transmitted from one computer-readable storage medium to another computer-readable storage medium. For example, the computer instructions may be transmitted from a website, a computer, a training device, or a data center to another website site, computer, training device, or data center in a wired (such as a coaxial cable, an optical fiber, a digital subscriber line (DSL)) or wireless (such as infrared, radio, microwave) manner. The computer-readable storage medium may be any usable medium that can be stored by the computer, or a data storage device such as a training device or a data center integrated with one or more usable media. The usable medium may be a magnetic medium (for example, a floppy disk, a hard disk, or a magnetic tape), an optical medium (for example, a DVD), a semiconductor medium (for example, a solid-state drive (Solid-State Drive, SSD)), or the like.

## Claims

1. A corpus annotation method, wherein the method is applied to a corpus annotation system, the corpus annotation system comprises a client and a corpus annotation apparatus, and the method comprises:
obtaining, by the corpus annotation apparatus, a corpus set provided by a user through the client, wherein the corpus set comprises a plurality of semantic categories of corpuses that the user expects to annotate;
determining, by the corpus annotation apparatus, a manual annotation corpus an automatic annotation corpus falling within a target semantic category in the corpus set;
obtaining, by the corpus annotation apparatus, a manual annotation result of the manual annotation corpus; and
annotating, by the corpus annotation apparatus, the automatic annotation corpus based on the manual annotation result of the manual annotation corpus, to obtain an automatic annotation result of the automatic annotation corpus, wherein the manual annotation result and the automatic annotation result are used as training data to train an inference model.

2. The method according to claim 1, wherein the corpus annotation system further comprises a model training platform, the model training platform is configured with at least one inference model, and the method further comprises:
training, by the model training platform, the inference model of the user based on the manual annotation result and the automatic annotation result.

3. The method according to claim 1, wherein the corpus annotation system further comprises a model training platform, the model training platform is configured with at least one inference model, and the method further comprises:
training, by the model training platform by using the manual annotation result and the automatic annotation result that correspond to the corpus set, an inference model of another user based on a selection operation performed by the another user for the corpus set.

4. The method according to any one of claims 1 to 3, wherein the annotating, by the corpus annotation apparatus, the automatic annotation corpus based on the manual annotation result of the manual annotation corpus comprises:
calculating, by the corpus annotation apparatus, a semantic distance between the manual annotation corpus and the automatic annotation corpus; and
when the semantic distance satisfies a preset condition, annotating, by the corpus annotation apparatus, the automatic annotation corpus based on the manual annotation result of the manual annotation corpus, a syntax structure of the manual annotation corpus, and a syntax structure of the automatic annotation corpus.

5. The method according to claim 4, wherein the calculating, by the corpus annotation apparatus, a semantic distance between the manual annotation corpus and the automatic annotation corpus comprises:
obtaining, by the corpus annotation apparatus, a first vectorized feature of the manual annotation corpus and a second vectorized feature of the automatic annotation corpus; and
calculating, by the corpus annotation apparatus, the semantic distance between the manual annotation corpus and the automatic annotation corpus based on the first vectorized feature and the second vectorized feature.

6. The method according to claim 4 or 5, wherein the corpus annotation apparatus calculates the semantic distance by using an artificial intelligence AI model, and the method further comprises:
obtaining, by the corpus annotation apparatus, a manual check result for an annotation result of the automatic annotation corpus; and
when the manual check result indicates that the automatic annotation corpus is incorrectly annotated, updating, by the corpus annotation apparatus, the AI model by using the automatic annotation corpus and the manual check result.

7. The method according to claim 6, wherein the annotation result of the automatic annotation corpus comprises confidence, and the obtaining, by the corpus annotation apparatus, a manual check result for an annotation result of the automatic annotation corpus comprises:
obtaining, by the corpus annotation apparatus, the manual check result for the annotation result of the automatic annotation corpus when the confidence is less than a confidence threshold.

8. The method according to any one of claims 1 to 7, wherein before the determining, by the corpus annotation apparatus, a manual annotation corpus and an automatic annotation corpus falling within a target semantic category in the corpus set, the method further comprises:
providing, by the corpus annotation apparatus, a semantic category configuration interface, wherein the semantic category configuration interface is presented to the user through the client;
in response to a configuration operation performed by the user on the semantic category configuration interface, determining, by the corpus annotation apparatus, a semantic category that each of corpuses in the corpus set falls within; and
clustering, by the corpus annotation apparatus, the corpuses in the corpus set based on the plurality of semantic categories.

9. The method according to claim 8, wherein before the clustering the corpuses in the corpus set, the method further comprises:
providing, by the corpus annotation apparatus, a feature configuration interface, wherein the feature configuration interface comprises a plurality of feature candidates, and the feature configuration interface is presented to the user through the client; and
in response to a selection operation performed by the user on the feature configuration interface for the plurality of feature candidates, determining, by the corpus annotation apparatus, a target feature used for clustering the corpuses in the corpus set.

10. A corpus annotation apparatus, wherein the corpus annotation apparatus is used in a corpus annotation system, the corpus annotation system further comprises a client, and the corpus annotation apparatus comprises:
a corpus determining module, configured to: obtain a corpus set provided by a user through the client, wherein the corpus set comprises a plurality of semantic categories of corpuses that the user expects to annotate; and determine a manual annotation corpus and an automatic annotation corpus falling within a target semantic category in the corpus set; and
an annotation module, configured to: obtain a manual annotation result of the manual annotation corpus, and annotate the automatic annotation corpus based on the manual annotation result of the manual annotation corpus, to obtain an automatic annotation result of the automatic annotation corpus, wherein the manual annotation result and the automatic annotation result are used as training data to train an inference model.

11. The apparatus according to claim 10, wherein the annotation module is configured to:
calculate a semantic distance between the manual annotation corpus and the automatic annotation corpus; and
when the semantic distance satisfies a preset condition, annotate the automatic annotation corpus based on the manual annotation result of the manual annotation corpus, a syntax structure of the manual annotation corpus, and a syntax structure of the automatic annotation corpus.

12. The apparatus according to claim 11, wherein the annotation module is configured to:
obtain a first vectorized feature of the manual annotation corpus and a second vectorized feature of the automatic annotation corpus; and
calculate the semantic distance between the manual annotation corpus and the automatic annotation corpus based on the first vectorized feature and the second vectorized feature.

13. The apparatus according to claim 11 or 12, wherein the annotation module is configured to calculate the semantic distance by using an artificial intelligence AI model, and the apparatus further comprises a model optimization module, configured to:
obtain a manual check result for an annotation result of the automatic annotation corpus; and
when the manual check result indicates that the automatic annotation corpus is incorrectly annotated, update the AI model by using the automatic annotation corpus and the manual check result.

14. The apparatus according to claim 13, wherein the annotation result of the automatic annotation corpus comprises confidence, and the model optimization module is configured to obtain the manual check result for the annotation result of the automatic annotation corpus when the confidence is less than a confidence threshold.

15. The apparatus according to any one of claims 10 to 14, wherein the corpus determining module is further configured to:
provide a semantic category configuration interface before the corpus determining module determines the manual annotation corpus and the automatic annotation corpus falling within the target semantic category in the corpus set, wherein the semantic category configuration interface is presented to the user through the client;
in response to a configuration operation performed by the user on the semantic category configuration interface, determine a semantic category that each of corpuses in the corpus set falls within; and
cluster the corpuses in the corpus set based on the plurality of semantic categories.

16. The apparatus according to claim 15, wherein the corpus determining module is further configured to:
provide a feature configuration interface, wherein the feature configuration interface comprises a plurality of feature candidates, and the feature configuration interface is presented to the user through the client; and
in response to a selection operation performed by the user on the feature configuration interface for the plurality of feature candidates, determine a target feature used for clustering the corpuses in the corpus set.

17. A computer device, wherein the computer device comprises a processor and a memory; and
the processor is configured to execute instructions stored in the memory, to enable the computer device to perform the method according to any one of claims 1 to 9.

18. A computer-readable storage medium, wherein the computer-readable storage medium stores instructions, and when the instructions are run on a computing device, the computing device is enabled to perform the method according to any one of claims 1 to 9.

19. A computer program product comprising instructions, wherein when the computer program product runs on a computer device, the computer device is enabled to perform the method according to any one of claims 1 to 9.
